Europäisches Patentamt

European Patent Office

Office européen des brevets

(19)

(11) Veröffentlichungsnummer: **0 284 792 B1**

(12)  # EUROPÄISCHE PATENTSCHRIFT

(45) Veröffentlichungstag der Patentschrift: **11.09.91**

(51) Int. Cl.5: **A01D 90/04**

(21) Anmeldenummer: **88103038.1**

(22) Anmeldetag: **01.03.88**

(54) **Ladewagen.**

(30) Priorität: **03.04.87 DE 3711355**

(43) Veröffentlichungstag der Anmeldung:
**05.10.88 Patentblatt 88/40**

(45) Bekanntmachung des Hinweises auf die
Patenterteilung:
**11.09.91 Patentblatt 91/37**

(84) Benannte Vertragsstaaten:
**AT BE CH FR IT LI NL**

(56) Entgegenhaltungen:
**EP-A- 0 044 966**
**DE-U- 1 928 261**
**DE-U- 1 954 212**

(73) Patentinhaber: **Karl Mengele & Söhne, Maschinenfabriken GmbH & Co.**
**Augsburger Strasse 50**
**W-8870 Günzburg(DE)**

(72) Erfinder: **Lippl, Wilhelm**
**Fichtenweg 21**
**W-8873 Ichenhausen-Oxenbronn(DE)**
Erfinder: **Der andere Erfinder hat auf seine Nennung verzichtet**

(74) Vertreter: **Kahler, Kurt, Dipl.-Ing.**
**Patentanwälte Kahler & Käck Gerberstrasse**
**3 Postfach 1249**
**W-8948 Mindelheim(DE)**

## Beschreibung

Die Erfindung betrifft einen Ladewagen mit den Merkmalen des Oberbegriffs des Anspruchs 1.

Die Messer eines Ladewagens sind im Betrieb einer dauernden Belastung durch das zu schneidende Gut ausgesetzt und nützen sich im Laufe der Zeit an der Schneide ab. Um den zeitraubenden Ausbau der einzelnen Messer zum Nachschleifen zu vermeiden, wird in der EP-A-0044966 vorgeschlagen, die Messerreihe(n) mittels eines Rahmens in eine untere Lage außerhalb des Förderkanals zu verschwenken. Die Messer müssen dabei zwar nicht herausgenommen werden, jedoch muß hierbei die Bedienperson im beengten Raum zwischen abgeklappten Rahmen mit den Messern und der Unterseite des Laderaums mit dem Schleifgerät hantieren. Dadurch wird zudem ein exaktes Schleifen der Schneidkanten erschwert, da durch die gebückte Haltung der knieenden Bedienperson und dem Arbeiten in Vorlage eine genaue Führung des Schleifgerätes kaum möglich ist. Zudem ist für die Stromversorgung des Schleifgerätes nahezu immer ein Verlängerungskabel nötig, da das Stromkabel am meist verwendeten Winkelschleifer für die Verbindung zu der Steckdose in der Werkstatt zu kurz ist. Durch das Kabelgewirr ergeben sich zusätzliche Unfallgefahren.

Desweiteren ist aus der DE-PS 33 23 116 eine Schleifvorrichtung bekannt, die an einer Querstange über die Breite des Förderkanals verschiebbar ist und in der Vertikalebene der Messer verschwenkbar ist, wobei durch dieFührung des Schleifgerätes ein exakter Schliff erreicht werden soll. Nachteilig ist hierbei jedoch, daß die Bedienperson weiterhin zum Nachschleifen unter den Ladewagen kriechen muß und in knieender, vornübergebeugter Haltung das Schleifgerät bedienen muß. Dies ist besonders bei nassem, schmutzigem Boden sehr unangenehm.

Der Erfindung liegt somit die Aufgabe zugrunde, diese Nachteile zu vermeiden und einen Ladewagen der genannten Art zu schaffen, bei dem das Schleifen der Messer bei geringem Zeitaufwand in einer ergonomisch günstigen Haltung der Bedienperson möglich ist.

Diese Aufgabe wird erfindungsgemäß durch die kennzeichnenden Merkmale des Anspruchs 1 gelöst.

Dadurch ist die Zugänglichkeit der Messer uneingeschränkt und die ergonomische Haltung der Bedienperson beim Nachschleifen optimal. Zudem ist der gesamte Schneidrahmen mit den Messern z. B. in eine Werkstatt fahrbar, so daß auch kleinere Reparaturen bequem erfolgen können. Ebenso ist in einer Werkstatt meist eine gute Beleuchtung vorhanden, so daß das Nachschleifen auch abends durchgeführt werden kann, während bisher das Nachschleifen, gerade in der Haupterntezeit, oft noch unter Taschenlampenbeleuchtung erfolgen mußte. Weiterhin sind in der Werkstatt sämtliche Werkzeuge in Griffnähe und die Stromversorgung auf kurzem Wege möglich, um z.B. ein stärker beschädigtes Messer auszurichten oder ggf. auszubauen.

Bei einer bevorzugten Ausführungsform des Schneidrahmens können die für eine sichere Auflage und Transport nötigen drei oder vier Räder am Schneidrahmen dauernd verbleiben, so daß der Ausbau des Schneidrahmens durch die Schnellverschlüsse in Sekunden erledigt werden kann. Diese Zeit wird durch die bequeme Arbeitshaltung und günstigen Arbeitsbedingungen mehrfach wieder hereingeholt. Weitere vorteilhafte Ausgestaltungen sind Gegenstand der Unteransprüche und der Zeichnungen.

Ein Ausführungsbeispiel der Erfindung wird anhand der Zeichnungen nachfolgend näher beschrieben. Es zeigt:

Fig. 1: eine schematische Seitenansicht eines Ladewagens mit eingebautem Schneidrahmen

Fig. 2: den ausgebauten Schneidrahmen, der nach Lösen von Schnellverschlüssen seitlich unter dem Ladewagen herausgezogen ist.

Fig. 3: eine perspektivische Ansicht des teilweise seitlich herausgezogenem Schneidrahmens.

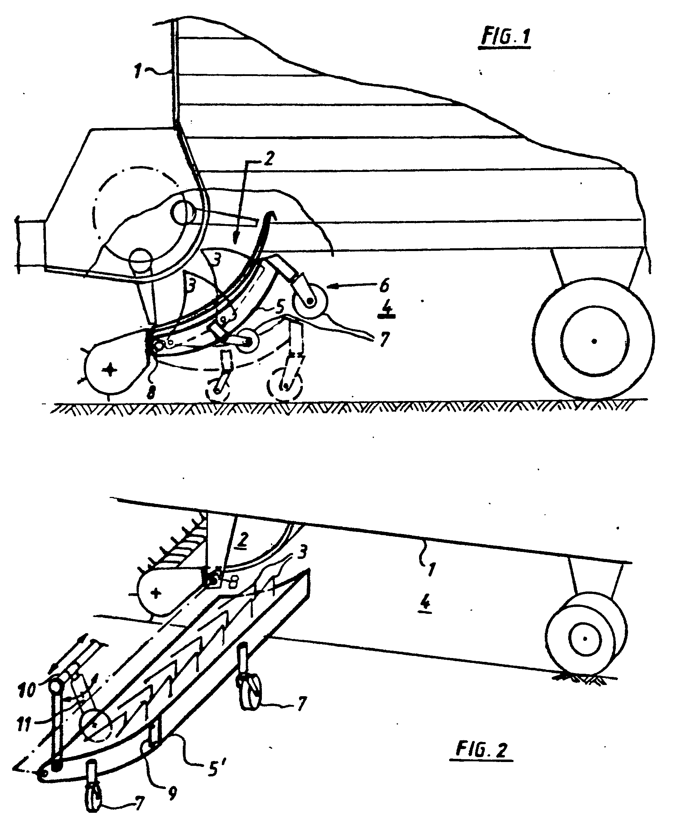

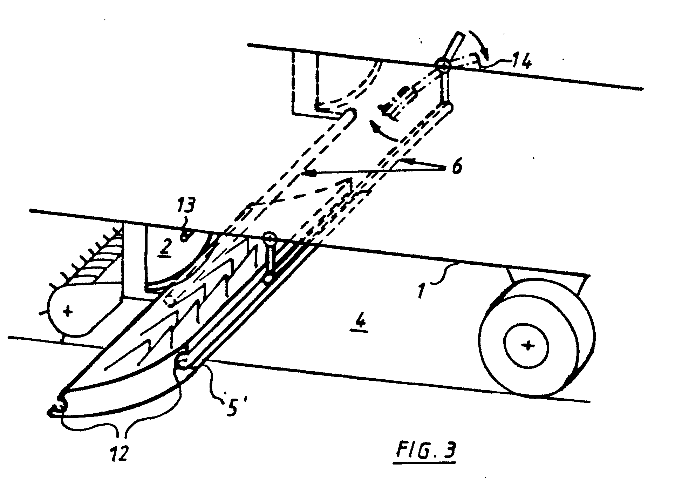

In Fig. 1 ist ein Ladewagen 1 teilweise dargestellt, bei dem das vom Boden aufgenommene Futtergut durch den Förderkanal 2 in den Laderaum gefördert wird. In den Förderkanal 2 ragen die Messer 3, die am Schneidrahmen 5 ggf. mittels nicht dargestellten Überlastsicherungen befestigt sind. Zwischen dem Förderkanal 2 und der Achse des Ladewagens 1 ergibt sich unterhalb dem Laderaum des Ladewagens 1 der Freiraum 4. Mit 6 sind die Abstützelemente bezeichnet, die gemäß Fig. 2 als Stützräder 7 oder gemäß Fig. 3 als Schiebeführung 12 ausgebildet sein können.

In Fig. 2 sind Schnellverschlüsse 8 dargestellt, die hier z. B. als Bolzen/Fanghaken-Verbindung ausgebildet sind. Nach dem Herausschwenken der Messer 3 aus dem Förderkanal 2 mittels des Schneidrahmens 5, wobei dann die Stützräder 7 auf dem Boden aufsetzen (vgl. strichliniert in Fig. 1) und dem Lösen der Schnellverschlüsse 8 kann der gesamte Schneidrahmen 5 auf einfache Weise seitlich unter dem Ladewagen 1 herausgezogen werden. Bei Bedarf kann der Schneidrahmen in die Hofwerkstatt weitertransportiert werden oder sogleich neben dem Ladewagen die Messer nachgeschliffen werden. In dieser Schleifstellung 5' des Schneidrahmens 5 sind die Messer 3 von vorne her ohne Beengung durch den Ladewagen erreichbar, so daß die Bedienperson in ergonomisch günstiger Haltung die Messer 3 schleifen kann. Als zusätzliche Hilfe kann auch eine Führung 10 auf den Schneidrahmen 5 aufgesteckt werden, so daß der Anschliffwinkel der Messer konstant bleibt, da das anmontierte Schleifgerät 11 exakt geführt wird.

In Fig. 3 ist eine weitere Ausführungsform der Erfindung schematisch dargestellt. Hierbei werden die Abstützelemente für den relativ schweren Schneidrahmen 5 mit der Vielzahl von Messern 3 durch die Schiebeführungen 12 gebildet, an denen der Schneidrahmen 5 schubladenartig zur Seite herausgezogen werden kann. Hierzu wird zunächst der Schneidrahmen 5 um die vordere Rund-Schiebeführung 12 mittels des Schwenkhebels 14 um ca. 30° nach unten geschwenkt, so daß die Messer 3 nicht mehr in den Förderkanal 2 hineinragen und so dann nach Lösen einer nicht dargestellten Arretierung seitlich z. B. an Handgriffen 9 herausgezogen. Dabei kann der Schneidrahmen 5 vollkommen herausgezogen werden, so daß alle Messer 3 zugänglich sind. Ebenso kann über dem Schneidrahmen 5 an einem Anlenkpunkt 13 an der Seite des Ladewagens 1 ein Schleifgerät 11 befestigt werden, so daß der Schneidrahmen 5 schrittweise jeweils um einen Messerabstand herausgezogen oder ggf. mit einer nicht dargestellten Kurbel herausgedreht werden kann, wobei jeweils ein Messer 3 geschliffen wird.

Außerdem kann der Schneidrahmen 5 zusammen mit dem Bodenblech des Förderkanals 2 ein Bauteil bilden, wobei für das schubladenartige Herausziehen des Schneidrahmens 5 dieser nicht mehr erst nach unten verschwenkt werden braucht, sondern nur noch seitlich verschoben werden braucht, sofern die Messer 3 jeweils zwischen zwei Förderrechen der Fördervorrichtung querverschiebbar sind. Diese Ausbildung eignet sich besonders für Ladewagen mit wenigen durchgehenden Förderrechen oder für Ladewagen mit lediglich einer Messerreihe, da eine solche auch bei dicht aufeinanderfolgenden Förderrechen, ggf. nur in einer bestimmten Drehstellung der Fördervorrichtung quer verschiebbar sind. Durch diese Maßnahme können als Schiebeführungen 12 auch z. B. einfachere U-Profile eingesetzt werden.

Durch diese Ausbildung der Schneidrahmen kann neben der optimalen Zugänglichkeit der Messer zum Nachschleifen auch ein kompletter Austausch des gesamten Schneidrahmens leicht und schnell durchgeführt werden, wenn ein zweiter kompletter Schneidrahmen vorhanden ist. Dies wird insbesondere von Lohnunternehmen gewünscht, da in Erntespitzenzeiten kaum Zeit zum Nachschleifen bleibt und bei deren hohen Transportvolumen oft ein oder mehrere Wechsel bzw. Nachschleifen der Messer an einem Arbeitstag nötig ist.

## Patentansprüche

1. Ladewagen mit einem Förderkanal, in den in Betriebsstellung eine Anzahl von Messern (3) hineinragen und an dessen Rückseite in einem Freiraum (4) unterhalb des Ladewagens wenigstens ein, die Messer tragender Schneidrahmen (5) angeordnet ist, der sich über die Breite des Förderkanals erstreckt und in eine Schleifstellung bewegbar ist, dadurch gekennzeichnet, daß der Schneidrahmen (5) an Abstützelementen (6) seitenverschiebbar ausgebildet ist und aus dem Freiraum (4) heraus in eine gut zugängliche Schleifstellung (5') neben den Ladewagen (1) bewegbar ist.

2. Ladewagen nach Anspruch 1, dadurch gekennzeichnet, daß als Abstützelemente (6) Stützräder (7) vorgesehen sind und der Schneidrahmen (5) mittels Schnellverschlüssen (8) vom Ladewagen (1) lösbar ist.

3. Ladewagen nach Anspruch 2, dadurch gekennzeichnet, daß die Stützräder (7) für die Bewegung in Schleifstellung (5') aufsteckbar sind.

4. Ladewagen nach Anspruch 2, dadurch gekennzeichnet, daß die Stützräder (7) fest am Schneidrahmen (5) angeordnet sind.

5. Ladewagen nach Anspruch 1, dadurch gekennzeichnet, daß am Schneidrahmen (5) Handgriffe (9) vorgesehen sind.

6. Ladewagen nach Anspruch 2, dadurch gekennzeichnet, daß wenigstens ein Stützrad (7) lenkbar ausgebildet ist.

7. Ladewagen nach Anspruch 2, dadurch gekennzeichnet, daß an dem Schneidrahmen (5) wenigstens eine quer zur Messerausrichtung verlaufende Führung (10) vorgesehen ist, auf der ein Schleifgerät (11) montierbar ist.

8. Ladewagen nach Anspruch 1, dadurch gekennzeichnet, daß die Abstützelemente (6) von sich über die Breite des Förderkanals (2) entsprechenden Schiebeführungen (12) gebildet sind, an denen der Schneidrahmen (5) schubladenartig in die Schleifstellung (5') bewegbar ist.

9. Ladewagen nach Anspruch 8, dadurch gekennzeichnet, daß ein Schleifgerät (11) an einem Anlenkpunkt (13) an der Seite des Ladewagens (1) befestigbar ist und in der jeweiligen Vertikalebene der einzelnen Messer (3) verschwenkbar angeordnet ist.

10. Ladewagen nach Anspruch 8, dadurch gekennzeichnet, daß die Krümmungsradien der Schneidkanten der Messer (3) der Bewegungsbahn des Schleifgerätes (11) um den Anlenkpunkt (13) entspricht.

## Claims

1. Loading waggon with a conveying channel into which in operation position a number of knives (3) is projecting, and having at its rear at least one knife-supporting cutting frame (5) arranged in a free space (4) below the loading waggon, said cutting frame (5) extending over the width of the conveying channel and being displaceable to a grinding position, characterized in that the cutting frame (5) is formed laterally displaceable at supporting elements (6) and is movable from the free space (4) into a well accessible grinding position (5') beside the loading waggon (1).

2. Loading waggon according to claim 1, characterized in that there are provided supporting wheels (7) as supporting elements (6), and the cutting frame (5) is releasable from the loading waggon (1) by quick couplers (8).

3. Loading waggon according to claim 2, characterized in that the supporting wheels (7) are pluggable for the movement into the grinding position (5').

4. Loading waggon according to claim 2, characterized in that the supporting wheels (7) are fixed to the cutting frame (5).

5. Loading waggon according to claim 1, characterized in that the cutting frame (5) is provided with handles (9).

6. Loading waggon according to claim 2, characterized in that at least one supporting wheel (7) is formed steerable.

7. Loading waggon according to claim 2, characterized in that at the cutting frame (5) there is provided at least one guidance (10) extending transversely to the orientation of the knives and adapted to have attached thereto a grinding apparatus (11).

8. Loading waggon according to claim 1, characterized in that the supporting elements (6) are formed by railings (12) extending over the width of the conveying channel (2) and on which the cutting frame (5) is displaceable in a drawer-like manner into the grinding position (5').

9. Loading waggon according to claim 8, characterized in that a grinding apparatus (11) is mountable to an articulation point (13) at one side of the loading waggon (1) and is pivotable in the appropriate vertical plane of the individual knives (3).

10. Loading waggon according to claim 8, characterized in that the radii of curvature of the cutting edges of the knives (3) correspond to the travelling path of the grinding apparatus (11) around the articulation point (13).

## Revendications

1. Chargeuse mobile, avec un canal d'acheminement, dans lequel pénètrent un certain nombre de lames (3) en position de service et sur le côté arrière duquel est disposé, dans un espace libre (4) en dessous de la chargeuse mobile, au moins un bâti de coupe (5) qui porte les lames, qui s'étend sur la largeur du canal d'acheminement et qui peut être déplacé à une position d'affûtage, caractérisée en ce que le bâti de coupe (5) est conçu avec possibilité de translation latérale sur des éléments de soutien (6), et peut être sorti de l'espace libre (4) pour être amené à une position d'affûtage d'accès facile (5'), à côté de la chargeuse mobile (1).

2. Chargeuse mobile selon la revendication 1, caractérisée en ce que des roues de soutien (7) sont prévues comme éléments de soutien (6) et le bâti de coupe (5) peut être détaché de la chargeuse mobile (1) à l'aide d'accouplements rapides (8).

3. Chargeuse mobile selon la revendication 2, caractérisée en ce que les roues de soutien (7) peuvent être rapportées en vue du déplacement en position d'affûtage (5').

4. Chargeuse mobile selon la revendication 2, caractérisée en ce que les roues de soutien (7) sont disposées fixement sur le bâti de coupe (5).

5. Chargeuse mobile selon la revendication 1, caractérisée en ce que des poignées (9) sont prévues sur le bâti de coupe (5).

6. Chargeuse mobile selon la revendication 2, caractérisée en ce qu'au moins une roue de soutien (7) est réalisée dirigeable.

7. Chargeuse mobile selon la revendication 2, caractérisée en ce qu'il est prévu sur le bâti de coupe (5) au moins un guide (10) qui s'étend perpendiculairement à l'orientation des lames et sur lequel peut être monté un appareil d'affûtage (11).

8. Chargeuse mobile selon la revendication 1, caractérisée en ce que les éléments de soutien (6) sont constitués par des glissières (12) s'étendant sur la largeur du canal d'acheminement (2), sur lesquelles le bâti de coupe (5) peut être déplacé à la position d'affûtage (5') à la manière d'un tiroir.

9. Chargeuse mobile selon la revendication 8, caractérisée en ce qu'un appareil d'affûtage (11) peut être fixé en un point d'articulation (13) sur le côté de la chargeuse mobile (1) et est disposé avec possibilité de pivotement dans le plan vertical respectif des différentes lames (3).

10. Chargeuse mobile selon la revendication 8, caractérisée en ce que les rayons de courbure des tranchants des lames (3) correspondent à la trajectoire de déplacement de l'appareil d'affûtage (11) autour du point d'articulation (13).

FIG.1

FIG. 2

FIG. 3